# EUROPEAN PATENT APPLICATION

(11) **EP 1 977 815 A1**
(43) Date of publication of application: **08.10.2008**
(21) Application number: 07706852.6
(22) Date of filing: 16.01.2007
(51) Int. Cl.: B01D 53/34, B01D 53/46, B01D 53/70, B01D 53/86

(54) **APPARATUS FOR TREATING EXHAUST GAS**

(30) Priority: 27.01.2006 JP 2006019332
(71) Applicant: Taiyo Nippon Sanso Corporation, Shinagawa-ku, Tokyo 1428558 (JP)
(72) Inventor: SUZUKI, Katsumasa, Tokyo 142-8558 (JP); YAMAWAKI, Masaya, Tokyo 142-8558 (JP); SATO, Takayuki, Tokyo 142-8558 (JP)
(74) Representative: Waldren, Robin Michael
(86) International application number: PCT/JP2007/050525
(87) International publication number: WO 2007/086283

(57) **Abstract**

An exhaust gas treatment system, which comprises: an arithmetic processing part wherein the type of gas, the flow rate and the supply time of a gas supplied to a gas-using facility are inputted as parameters, and the type of gas, the flow rate and the supply time of an additive gas is calculated based on these parameters; an additive gas supply part , which supplies an additive gas while controlling the type of gas, the flow rate and the supply time of the additive gas in accordance with indication signals sent from the arithmetic processing part; and a removal part wherein the additive gas is added to an exhaust gas exhausted from the gas-using facility, and a target compound included in the exhaust gas is removed by reacting the additive gas and the target compound included in the exhaust gas.

## Description

### TECHNICAL FIELD

The present invention relates to an exhaust gas treatment system.

Priority is claimed on Japanese Patent Application No. 2006-19332, filed January 27, 2006, the content of which is incorporated herein by reference.

### BACKGROUND ART

Various gases are used in gas-using facilities in order to manufacture and/or treat a product such as a semiconductor, a flat display, a solar cell, a magnetic thin film and the like in accordance with manufacturing processes of the facilities. In such gas-using facilities, for example, gases such as Ar, CF₄, H₂, O₂ and NOx are supplied to a production equipment or the like (hereinafter, a gas supplied to a gas-using facility may be described as a supply gas), processing is conducted using the gases, and then an exhaust gas is exhausted from the gas-using facilities.

In the exhausted gas, compounds including halogen such as CF₄, SiF₄ and C₂F₆, residual O₂, H₂ and NOx, Ar and the like, which are originated from the aforementioned gases supplied to the facilities, are included. Among them, the compounds including halogen have high Global Warming Potential, and therefore, treatment for decomposing and/or removing the composition including halogen is highly required.

Furthermore, as a case that a gas included in an exhaust gas is reused, for example, Ar included in an exhaust gas is recovered and reused. In such a case, it is necessary to remove O₂, H₂, NOx or the like from the exhaust gas as well as a compound including halogen.

In this way, treatment of an exhaust gas is very important.

For example, Japanese Unexamined Patent Application, First Publication No 2002-153729 discloses a method in which an exhaust gas such as those described above is mixed with a predetermined amount of water vapor wherein the amount is calculated based on the concentration of a compound including halogen within the exhaust gas, and then, the mixed gas is introduced into a discharge treatment part in order to decompose the compound including halogen and remove the decomposition products generated.

In the above treatment method of the exhaust gas, the concentration of the compound including halogen within the exhaust gas is merely measured, and the addition amount of water vapor is determined based on the measured concentration of the compound. However, since the amount of water vapor is determined merely based on the concentration of the compound including halogen in the treatment method, there is a case in which excess amount of water vapor is added to an exhaust gas due to the variation or the like of the type and/or concentration of various gas components, which are included in the exhaust gas but are different from the compound including halogen. In such a case, the discharge state at the discharge treatment part changes due to the excess water vapor, the decomposition ratio of a compound including halogen varies, and problems are caused such that removal of the compound including halogen is not conducted sufficiently.

In this way, when the conventional method is used, that is, when the method using a device, in which the amount of an additive gas such as water vapor is determined merely by measuring the concentration of a compound including halogen in an exhaust gas, is used, the optimum amount of an additive gas cannot be determined since, for example, even if other gases such as O₂ and H₂ which have the same functions with those of an additive gas are included in the exhaust gas, the presence of said other gases are ignored in the method when an additive gas is used (hereinafter, a gas which is added to treat an exhaust gas may be described as an additive gas). As the result, there are cases that a compound including halogen cannot be removed completely.

Furthermore, as those in the conventional method, that is, as in the method wherein the removal is conducted by measuring the concentration of a target component, which is a compound to be removed, within the exhaust gas sent from the gas-using facility, and then adding an additive gas such as water vapor in accordance with said concentration of the target component to react the additive gas with the target component and remove the target component, there are disadvantages that, if there are multiple target components to be removed or decomposed are included in the exhaust gas, plural devices are required in order to measure the concentration of each target component, and equipment cost increases.

Patent Document 1: Japanese Unexamined Patent Application, First Publication No. 2002-153729

### DISCLOSURE OF INVENTION

### Problem to be Solved by the Invention

The object to be achieved in the present invention is to provide a system which can remove a target compound sufficiently and completely at a small cost, even if the type and/or concentration of the target compound such as a compound including halogen varies when treatment such as a plasma treatment is conducted in order to remove the target compound included in an exhaust gas exhausted from the gas-using facility such as semiconductor manufacturing equipment.

### Means for Solving the Problem

The first aspect of the present invention is an exhaust gas treatment system, which comprises:
an arithmetic processing part wherein the type of gas, the flow rate and the supply time of a gas supplied to a gas-using facility are inputted as parameters, and the type of gas, the flow rate and the supply time of an additive gas are calculated based on these parameters;
an additive gas supply part, which supplies an additive gas while controlling the type of gas, the flow rate and the supply time of the additive gas in accordance with indication signals sent from the arithmetic processing part; and
a removal part wherein the additive gas is added to an exhaust gas exhausted from the gas-using facility, and a target compound included in the exhaust gas is removed by reacting the additive gas and the target compound included in the exhaust gas.

The second aspect of the present invention is an exhaust gas treatment system, which includes:
an arithmetic processing part wherein the type of gas, the flow rate and the supply time of a gas supplied to a gas-using facility are inputted as parameters, and the type of gas, the flow rate and the supply time of an additive gas to be supplied to an exhaust gas and electric power to be applied in plasma treatment are calculated based on these parameters;
an additive gas supply part, which supplies an additive gas while controlling the type of gas, the flow rate and the supply time of the additive gas in accordance with indication signals sent from the arithmetic processing part;
a power source part which controls and applies electric power in accordance with indication signals sent from the arithmetic processing part; and
a removal part wherein the additive gas is added to the exhaust gas, which comprises a compound including halogen and is exhausted from the gas-using facility, and the compound including halogen within the exhaust gas is removed by decomposing the compound including halogen by plasma treatment based on the applied electric power. Effects of the present Invention

In the present invention, the arithmetic processing part can calculate the type of gas, the flow rate and the supply time of an additive gas, and furthermore can calculate electric power required in a plasma treatment if necessary, in accordance with information with regard to the type of gas, the flow rate and the supply time of a gas which is supplied to a gas-using facility. Accordingly, it is possible to apply to the treatment part the required and a sufficient amount of an additive gas and/or electric power for plasma decomposition, and therefore, the removal of a target compound such as a compound including halogen can be fully conducted.

Furthermore, according to the present invention, it is not necessary to apply an excess amount of an additive gas and/or plasma electric power, and as a result, operating cost becomes small since an additive gas and/or plasma electric power is not wasted. Furthermore, it is not necessary to use multiple devices used for measuring the concentration of each aimed component to be removed such as a compound including halogen which is included in a small amount within an exhaust gas.

### BRIEF DESCRIPTION OF THE DRAWINGS

Fig. 1 is a schematic structural view which shows an example of the treatment system for an exhaust gas of the present invention.
Fig. 2 shows an example of the structure of a SiF₄ removing part of the treatment system for an exhaust gas of the present invention.
Fig. 3 shows another example of the structure of a SiF₄ removing part of the treatment system for an exhaust gas of the present invention.
Fig. 4 shows an example of the structure of an arithmetic processing part of the present invention.
Fig. 5 is a schematic structural view which shows another example of the treatment system for an exhaust gas of the present invention.

1: a gas-using facility
2: a gas supplying device
3: an exhaust gas treatment system
35: an arithmetic processing part
33: an additive gas supply part
343: a high-voltage power supply part

### BEST MODE FOR CARRYING OUT THE INVENTION

Hereinafter, suitable examples of the present invention are explained, but the present invention is not limited to the examples. Any change and/or addition is possible in so far as it is included in the scope of the present invention. The number and the position of the systems can be changed as necessary.

The present invention relates to a treatment system which removes a target compound such as a compound including halogen which is included in an exhaust gas exhausted from a gas-using facility such as semiconductor manufacturing equipment. Said gas-using facility can mean any facility in so far as the facility uses gas. Preferable examples of the gas-using facility includes facilities which conduct the manufacture, treatment or the like of a semiconductor, a flat display, a solar cell, a magnetic thin film or the like. The gas which can be used in the facility is not limited, and any gas can be used as the gas used in the facility. Specific examples of the gas include Ar, CF₄, H₂, O₂ and NOx.

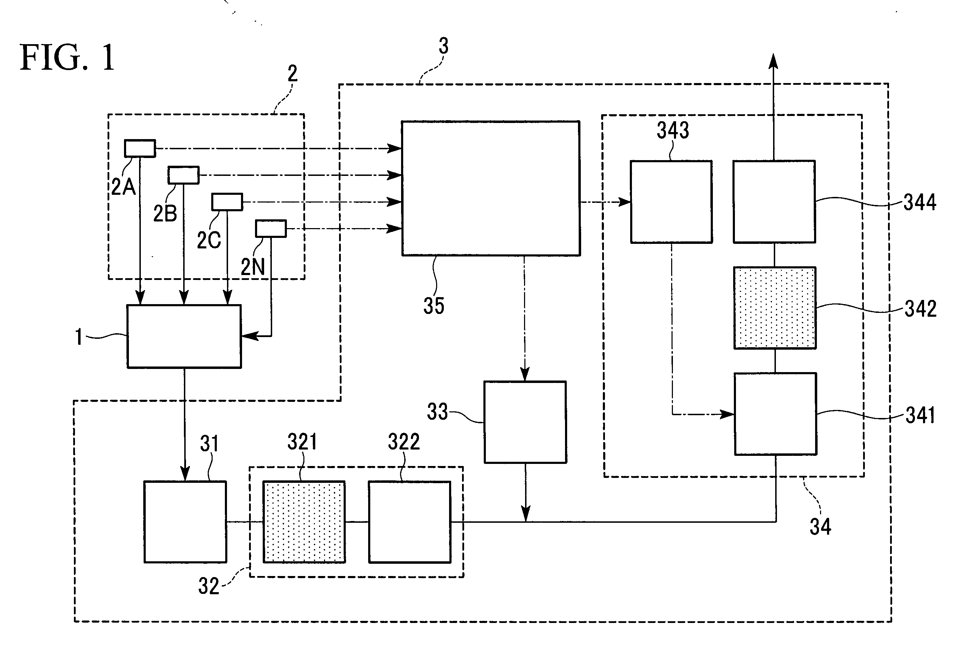

Furthermore, an exhaust gas treated in the present invention can be any type of gas in so far as problems do not arise. Examples of compounds included in the exhaust gas include gases such as CF₄, SiF₄, C₂F₆, which are a compound including halogen, Ar, and residual O₂, H₂ and NOx. Fig. 1 shows an example of an treatment system of an exhaust gas of the present invention. The exhaust gas comprises a compound including halogen, and the compound including halogen is removed by the system of the present invention.

In Fig. 1, the reference number 1 represents a gas-using facility such as semiconductor manufacturing equipment. To the gas-using facility 1, at least one kind of gas which is used in the facility 1, generally multiple type of gases, is supplied from a gas supplying device 2. The gases may be supplied such that all gases are supplied separately or the gases are mixed before the supply if necessary. For example, when a dry-etching process is conducted in the gas-using facility 1, the predetermined amount of a gas such as Ar, CF₄, O₂ or the like is supplied from the gas supplying device 2.

The gas supplying device 2 supplies a gas. When the supplying is conducted by the device, the supplying flow rate and supplying time are measured for each type of supplied gases with one of, or plurality of flow rate regulators 2A, 2B, 2C···2N. In the present invention, the number of regulators can be determined optionally and can be selected if necessary. It is preferable that the number of the regulators is the same as the number of supplied gases. Each signal measured by the flow rate regulators is sent to and inputted in the arithmetic processing part 35 of the exhaust gas treatment system 3. Here, these flow rate regulators may be those used generally in the conventional gas supplying device. That is, it is possible to use a flow rate regulator which has been provided to the conventional gas supplying device. In such a case, it is not necessary to provide all of the required flow rate regulators as new members, in so far as the structure can be set such that the supplied flow rate and supplying time of each type of additive gas are measured and sent to the arithmetic processing part.

On the other hand, an exhaust gas is exhausted from the gas-using facility 1 when, for example, the manufacture of a semiconductor or the like is conducted. Various gases and compounds are included in the exhaust gas. For example, when a dry-etching process is conducted, the exhaust gas includes Ar, O₂ and the like in addition to a compound including halogen such as SiF₄, CF₄, C₂F₆ or the like.

The exhaust gas exhausted from the facility is sent to the exhaust gas treatment device 3. That is, the exhaust gas is first sent to a SiF₄ removal column 321 of a SiF₄ removing part 32 under the condition of the reduced pressure by conducting aspiration using a vacuum pump 31 and/or 344. An adsorbent such as calcium hydroxide, calcium oxide or the like is filled in the interior of the SiF₄ removal column 321, and SiF₄ and the like within the exhaust gas is removed at the cyclinder. The shape and the number of the removal column, the amount of and type of adsorbent and the like can be selected as necessary.

Compounds such as SiF₄ may form at the atmospheric pressure a solid of a gel-like polymer as the result of the reaction between the SiF₄ and water component within an exhaust gas, and therefore deposition of the polymer may be formed in a duct. Accordingly, it is preferable that SiF₄ is removed in advance under the reduced pressure as those described above.

The flow of the exhaust gas passed through the SiF₄ removal column 321 enters in the SiF₄ monitor 322 equipped at the down stream of the SiF₄ removal column 321, and the concentration of SiF₄ is measured at the monitor. After it is confirmed that the concentration of SiF₄ of the exhaust gas does not exceed the allowable value, the exhaust gas is sent to a treatment part 34 to be rendered harmless. If necessary, the data of the measured SiF concentration can be sent to the arithmetic processing part 35 and be used in order to conduct a further control. It is possible to remove HF or the like as well as SiF₄ in the SiF₄ removal column 321.

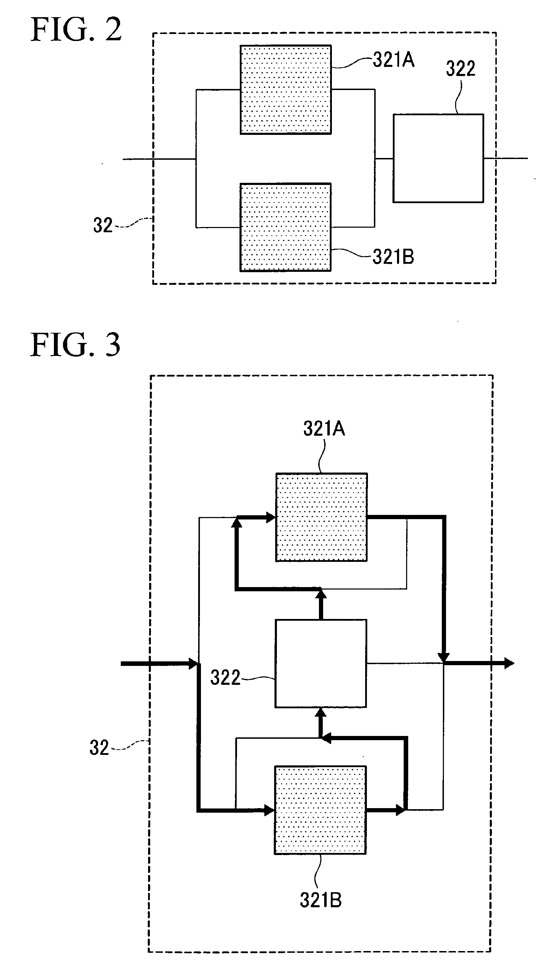

Generally, the SiF₄ removal column 321 has two columns, that is, a removal column 321A and a removal column 321B, which are placed in the parallel manner as shown in Fig. 2. The columns are used one by one. That is, when the removal column 321A is used and the reaction efficiency thereof deteriorates as the reaction between SiF₄ and an adsorbent of the column 321A proceeds, the SiF₄ monitor 322 detects the deterioration. At this point, an exhaust gas is sent in turn to the other column, which is the removal column 321B. While the removal column 321B is used, the adsorbent in the removal column 321A is changed to a new adsorbent.

However, the arrangement of the removal columns causes concern that when the reaction efficiency of the removal column, which is being used, deteriorates, SiF₄ flows to the downstream of the column although the amount of SiF₄ may be very small, and blockage of a duct may occur.

Accordingly, it is preferable that the arrangement of removal columns as those shown in Fig. 3 is adopted.

In the arrangement of Fig. 3, an exhaust gas sent from a gas-using facility 1 is introduced in a removal column 321A, and the exhaust gas which goes out of the removal column 321A is then introduced into a SiF₄ monitor 322 to measure the concentration of SiF₄. However, subsequent to the measurement, the exhaust gas is further introduced into a removal column 321B and is passed through the removal column 321B. In the arrangement, when the SiF₄ monitor 322 detects the deterioration of the SiF₄ removing property of the removal column 321A, the stream of the exhaust gas sent from the facility is changed such that the stream is introduced at first into the removal column 321B. That is, next, the exhaust gas passed through the removal column 321B is sent to the removal column 321A via the monitor 322.

In such an arrangement, it is possible to use removal columns efficiently until the adsorption ability thereof is consumed. Furthermore, SiF₄ is not sent in a duct positioned at the downstream of the SiF₄ removing part 32, and therefore there is no concern that stoppage of a duct is caused.

Then, the exhaust gas is sent from the SiF₄ treatment part 32 to a treatment part 34 to be rendered harmless. On the way to the treatment part 34, an additive gas supplied from an additive gas supply part 33 is added and mixed to the exhaust gas. The additive gas supply part 33 supplies the predetermined amount of an additive gas such as O₂, H₂, water vapor and the like wherein the amount thereof is determined by the arithmetic processing part which is described below. The arithmetic processing part 35 described below determines the type and amount of the additive gas. The additive gas may be a single gas or multiple gases, and may be a mixed gas if necessary.

In the subsequent step for the plasma decomposition, the additive gas can react as an oxidizing agent or a reducing agent for a decomposition product, which is generated by the plasma decomposition of a compound including halogen. As the result, the decomposition product generated is stabilized and becomes a chemical species which can be easily treated.

The exhaust gas to which the additive gas is mixed is introduced into a discharge part 341 of the treatment part 34 to be rendered harmless. In this part, a compound which can be decomposed by the plasma decomposition, for example, a compound including halogen such as CF₄, is decomposed. Here, when hydrogen, oxygen or the like, which is originated from the additive gas, coexists at the time of the decomposition caused by the plasma discharge, constitutive atoms generated by the dissociation of the compound including halogen can become a chemical species which can be easily treated. For example, active C and F which are generated by the decomposition of CF₄ become HF and CO or CO₂ due to the presence of hydrogen and oxygen.

The discharge part 341 has general electrodes to which high frequency current is applied in order to excite a plasma discharge. To the electrodes, electric power, which preferably has a frequency of 2.0 to 2.4 GHz and an output of 2 to 3 kW, is applied from a high-voltage power supply part 343. The applied electric power is determined by the arithmetic processing part 35 described below.

The exhaust gas passed through the discharge part 341 includes a decomposition product generated from the compound including halogen. In the subsequent step, the exhaust gas is introduced into a gas reaction column 342. In the interior of the gas reaction column 342, a reaction agent such as calcium oxide and calcium hydroxide is filled, and the aforementioned decomposition product is removed in the column due to the reaction of the decomposition product and the reaction agent. Here, the number, the shape of the gas reaction column, the type of the reaction agent and the amount of the reaction agent can be selected if necessary.

The exhaust gas which passes through the gas reaction column 342 does not include harmful matter such as a compound including halogen, and the exhaust gas is aspirated by a vacuum pump 344 to discharge the gas out of the system.

Next, the arithmetic processing part is explained.

To the arithmetic processing part 35, data regarding the type of gas, the flow rate and the supply time of various gases, which are supplied from the gas supplying device 2 to the gas-using facility 1, are inputted. According to this data, the total amount of an exhaust gas which is exhausted from the gas-using facility 1, the flow rate and the concentration of a compound including halogen within the exhaust gas, the flow rate and concentration of an oxidizing agent such as oxygen within the exhaust gas, and the flow rate and the concentration of a reducing agent such as hydrogen, are calculated. Other data can be inputted to the arithmetic processing part if necessary. Subsequently, based on the date calculated, the optimum amount of an additive gas, and the optimum applied electric power which is required and sufficient for the plasma discharge treatment are calculated.

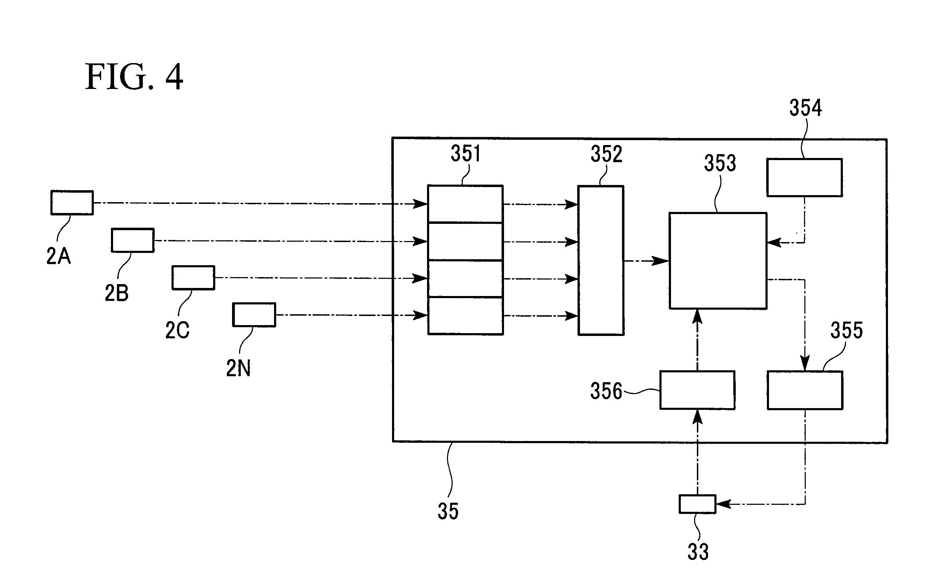

Fig. 4 shows an example of an interior structure of the arithmetic processing part 35. Each flow rate analog signal, wherein the signal is sent from each flow rate regulator such as 2A and 2B of the gas supplying device 2, is inputted to an A/D converter 351 which has multiple channels in accordance with the type of gases, and the each flow rate analog signal is converted to a digital signal and is stored in a memory 352. In the main memory 354, an operation program is stored. When the flow rate digital signal converted from the flow rate analog signal is inputted to a processor 353, the aforementioned operation program of the main memory 354 is referenced by the processor 353 to conduct the arithmetic processing. As a result, the optimum amount of an additive gas, the optimum applied electric power used in plasma discharge and the like can be calculated.

The aforementioned operation program includes a database which is prepared in advance. The correlations among the type of gas, the flow rate and the supply time of a gas supplied to the gas-using facility 1, and the type of gas, the flow rate and the concentration of a gas exhausted from the facility 1, wherein the correlation is obtained by conducting experiments, calculation or the like, are used as a data in the database. Furthermore, the operation program may include a database, in which the correlations among the type of gas, the flow rate and the concentration of a gas in an exhaust gas exhausted from the facility 1, the amount of an additive gas and the plasma discharge applied electric power are stored. This database may be used in combination. Due to the database, the aforementioned optimum amount of an additive gas and the optimum plasma discharge applied electric power can be calculated. The operation programs, which can be used for gas treatment concretely, are not described here since such programs can be obtained and inputted by conducting experiments, calculation or the like separately.

The optimum amount of an additive gas and the optimum plasma discharge applied electric power, which are obtained according the operation program as described above, are converted to analog signals with a D/A converter 355, and the signals are sent to the additive gas supply part 33 and the high-voltage power supply part 343. In the additive gas supply part 33, an additive gas is supplied to an exhaust gas in accordance with the sent signals. In the high-voltage power supply part 343, a plasma discharge applied electric power, which has an output value in accordance with the sent signals, is applied to the discharge part 341.

Here, changes, additions, deletions or the like are possible in the structure of the arithmetic processing part of the present invention if necessary.

Furthermore, as shown in Fig. 4, the electric signal of the flow rate of the additive gas, which is added by the additive gas supply part 33, may be sent to the A/D converter 356 of the arithmetic processing part 35 to be converted to a digital signal, and the digital signal may be inputted to the processor 353. In the processor 353, it is possible to monitor whether or not an additive gas is added according to the amount instructed, by comparing the signal of the additive gas, which is added, and the signal of the optimum amount of an additive gas, which is instructed to the additive gas supply part 33. Due to this monitoring, control can be conducted with a high degree of accuracy.

As described above, the optimum amount of an additive gas can be added and the optimum plasma discharge applied electric power can be applied, and therefore, an excess amount of an additive gas is not used in the present invention. Accordingly, variation of the decomposition ratio of a compound including halogen, wherein such a variation occurs due to the variation of the plasma discharging condition caused by an excess amount of an additive gas, does not occur.

Furthermore, it is possible to generate a plasma discharge in a sufficient amount properly, since an applied electric power can be determined in accordance with the amount of a compound including halogen within an exhaust gas in the present invention. An excess amount of electric power is not added, and plasma decomposition of a compound including halogen can be conducted sufficiently.

In the conventional device wherein the concentration of a compound including halogen within an exhaust gas is merely measured to determine the amount of an additive gas such as water vapor, even if another gas such as O₂ and H₂, which has a function similar to that of the compound including halogen, is included in the exhaust gas, the presence of another gas included in the exhaust gas is ignored, and the amount of additive gas is determined without taking into account the presence of another gas. Therefore, there is a case in which a compound including halogen cannot be removed completely. However, in the present invention, even if such an exhaust gas is treated, complete removal of a compound including halogen is possible since the amount of an additive can be determined while the presence of oxygen and hydrogen within an exhaust gas can be taken into consideration.

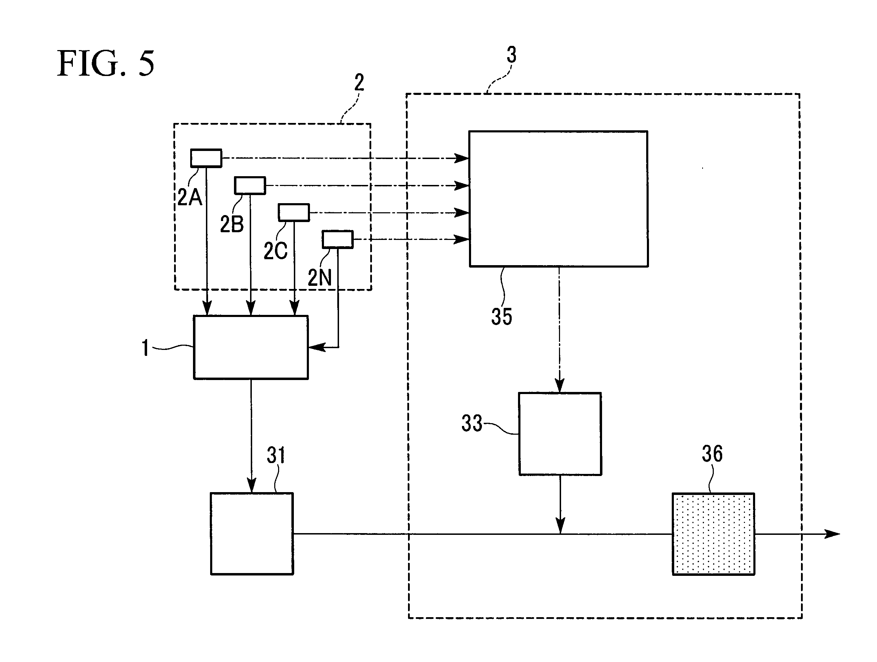

Fig. 5 shows another example of the exhaust gas treatment system of the present invention. In the gas-using facility 1, an oxidation process is conducted. Here, when the structural unit of Fig. 5 is the same as that of Fig. 1, the same reference numbers are provided and explanations thereof are omitted.

Ar, O₂, H₂ or the like is supplied to a gas-using facility 1 from a gas supplying device 2, and then an exhaust gas which includes Ar, residual O₂, H₂ and the like is exhausted from the gas-using facility 1. In the gas supplying device 2, an appropriate type and number of gas supply parts can be provided if necessary. As the type of additive gas which can be generally used, Ar, O₂, H₂ or the like can be cited.

The information with regard to the type of gas, the flow rate and the supply time of a gas, which is sent to the gas-using facility 1 from the gas supplying device 2, is sent to an arithmetic processing part 35 of the exhaust gas treatment system 3 similar to the method described above.

The exhaust gas exhausted from the gas-using facility 1 is aspirated by an exhaust pump 31, and is subsequently sent to a catalyst column 36 of the exhaust gas treatment device 3. On the way to the catalyst column 36, a gas such as H₂, which is supplied from an additive gas supply part 33, is added to the exhaust gas.

In the catalyst column 36, a catalyst which consists of noble metal such as platinum, palladium and the like is filled. The number and form of the columns and the type and amount of the catalyst can be selected as necessary. In the catalyst column 36, H₂O is generated by the reaction between O₂ within the exhaust gas and H₂ which is added, and therefore O₂ within the exhaust gas is removed as H₂O.

The amount of H₂, which is supplied from an additive gas supply part 33, is controlled to be the optimum amount according to the instruction signal sent from a arithmetic processing part 35.

The arithmetic processing part 35 of the example of Fig. 5 has similar structures and functions as those of Fig. 4. In the processor 353, wherein the presence of the processor 353 is omitted in Fig. 5, the optimum amount of H₂, which is an additive gas and is added by the additive gas supply part 33, is calculated according to signals inputted to the processor 353 wherein the signals are the type of gas, the flow rate and the supply time of an additive gas sent from the additive gas supplying device 2. In the calculation, the amount of H₂ supplied to the facility 1 is taken into consideration.

The monitoring of the amount of H₂, which is actually added in the additive gas supply part 33, is the same with those described in the aforementioned example of Fig. 4.

In order for the exhaust gas, which includes O₂ sent to the gas-using facility 1 from the gas supplying device 2, to arrives at the catalyst column 36, a certain amount of time is necessary. In order to conduct supply of an additive gas more suitably, the timing of adding an additive gas can be determined by conducting a calculation in the arithmetic processing part. That is, the time required for the gas to arrive at the column is measured in advance by experiment or the like. By setting the arithmetic processing part 35 such that an instruction signal which instructs the addition of an additive gas is given from arithmetic processing part 35 at the proper timing according to the said measured time which is required for the gas to arrive at the column, the addition of H₂ can be conducted suitably according to the arrival of the exhaust gas.

In the treatment system as those in Fig. 5, it is possible to add H₂ in a sufficient amount properly with respect to the amount of O₂ included in an exhaust gas, and furthermore, a suitable amount of H₂ can be added according to the variation of the amount of O₂. Accordingly, it is possible to remove O₂ from an exhaust gas completely, and it is not necessary to treat unreacted H₂ in a following step since H₂ is not used in an excess amount.

### INDUSTRIAL APPLICABILITY

The present invention provides a system in which a compound to be removed such as a compound including halogen within an exhaust gas exhausted from a gas-using facility can be removed completely and at a low cost even when the type of gas, the amount and the like of the target compound within an exhaust gas is changed when the target compound is removed from the exhaust gas.

## Claims

1. An exhaust gas treatment system, which comprises:
an arithmetic processing part wherein the type of gas, the flow rate and the supply time of a gas supplied to a gas-using facility are inputted as parameters, and the type of gas, the flow rate and the supply time of an additive gas are calculated based on these parameters;
an additive gas supply part, which supplies an additive gas while controlling the type of gas, the flow rate and the supply time of the additive gas in accordance with indication signals sent from the arithmetic processing part; and
a removal part wherein the additive gas is added to an exhaust gas exhausted from the gas-using facility, and a target compound included in the exhaust gas is removed by reacting the additive gas and the target compound included in the exhaust gas.

2. The exhaust gas treatment system according to Claim 1, wherein
the removal part has a SiF₄ removing part, wherein the exhaust gas is treated at first,
the SiF₄ removing part comprises first and second removal columns, which are parallel to each other, and a SiF₄ monitor is between the removal columns, and
the SiF₄ removing part makes the exhaust gas pass through the first removal column, pass through the SiF₄ monitor, and subsequently pass through the second removal column in this order, but the SiF₄ removing part makes the exhaust gas pass through the second removal column, pass through the SiF₄ monitor, and subsequently pass through the first removal column in this order when the deterioration of the reaction efficiency of the first removal column is detected by the SiF₄ monitor.

3. An exhaust gas treatment system, which comprises:
an arithmetic processing part wherein the type of gas, the flow rate and the supply time of a gas supplied to a gas-using facility are inputted as parameters, and the type of gas, the flow rate and the supply time of an additive gas to be supplied to an exhaust gas and electric power to be applied in plasma treatment are calculated based on these parameters;
an additive gas supply part, which supplies an additive gas while controlling the type of gas, the flow rate and the supply time of the additive gas in accordance with indication signals sent from the arithmetic processing part;
a power source part which controls and applies applied electric power in accordance with indication signals sent from the arithmetic processing parts; and
a removal part wherein the additive gas is added to the exhaust gas, which comprises a compound including halogen and is exhausted from the gas-using facility, and the compound including halogen within the exhaust gas is removed by decomposing the compound including halogen by plasma treatment based on the applied electric power.

4. The exhaust gas treatment system according to Claim 3, wherein, in the arithmetic processing part,
data with regard to the type of gas, the flow rate and the supply time of a gas, which is supplied from the gas supplying device to the gas-using facility, is inputted;
the total amount of the exhaust gas which is exhausted from the gas-using facility, the flow rate and concentration of a compound including halogen within the exhaust gas, the flow rate and concentration of an oxidizing agent within the exhaust gas, and the flow rate and concentration of a reducing agent, are calculated according to the inputted data; and
the optimum amount of an additive gas, and the optimum applied electric power required for the plasma discharge treatment are calculated based on the data obtained by the calculation.

5. The exhaust gas treatment system according to Claim 3, wherein the arithmetic processing part comprises:
a A/D converter wherein a flow rate analog signal sent from a flow rate regulator is converted to a flow rate digital signal;
a first memory which stores the flow rate digital signal;
a second memory which stores an operation program;
a processor which conducts arithmetic processing by reference to the operation program when a flow rate digital signal is inputted, and provides the optimum amount of an additive gas and the optimum applied electric power used in plasma discharge; and
a D/A converter which converts the calculated values to analog signals, and sends the signals to the additive gas supply part and the power source part.

6. An exhaust gas treatment method, which comprises:
conducting arithmetic calculation wherein the type of gas, the flow rate and the supply time of a gas supplied to a gas-using facility are inputted as parameters, and the type of gas, the flow rate and the supply time of an additive gas is calculated base on these parameters;
supplying an additive gas while controlling the type of gas, the flow rate and the supply time of the additive gas in accordance with indication signals sent from the arithmetic processing part; and
removing a target compound by adding the additive gas to an exhaust gas exhausted from the gas-using facility and reacting the target compound in the exhaust gas and the additive gas.
